(19) **Europäisches Patentamt**
**European Patent Office**
**Office européen des brevets**

(11) **EP 2 303 776 B1**

(12) **EUROPEAN PATENT SPECIFICATION**

(45) Date of publication and mention
of the grant of the patent:
**16.04.2014 Bulletin 2014/16**

(51) Int Cl.:
***B28D 5/00*** *(2006.01)*    ***C01B 33/037*** *(2006.01)*

(21) Application number: **08774936.2**

(22) Date of filing: **09.07.2008**

(86) International application number:
**PCT/EP2008/058931**

(87) International publication number:
**WO 2010/003456 (14.01.2010 Gazette 2010/02)**

(54) **METHOD FOR PURIFICATION AND COMPACTION OF FEEDSTOCK FOR PHOTOVOLTAIC APPLICATIONS**

VERFAHREN ZUR REINIGUNG UND KOMPAKTIERUNG VON EINSATZSTOFF FÜR PHOTOVOLTAISCHE ANWENDUNGEN

PROCÉDÉ DE PURIFICATION ET DE COMPACTAGE DE MATIÈRES PREMIÈRES POUR APPLICATIONS PHOTOVOLTAÏQUES

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**06.04.2011 Bulletin 2011/14**

(73) Proprietor: **Garbo S.r.l.**
**28065 Cerano (IT)**

(72) Inventor: **FRAGIACOMO, Guido**
**28100 Novara (IT)**

(74) Representative: **Banchetti, Marina et al**
**Barzanò & Zanardo Roma S.p.A.**
**Via Piemonte 26**
**00187 Roma (IT)**

(56) References cited:
**EP-A- 0 905 796     EP-A- 1 876 143**
**CN-A- 1 947 870     CN-A- 101 054 178**
**DD-A1- 240 729     DE-A1- 19 817 486**
**RU-C1- 2 097 320     US-A- 4 040 848**
**US-A1- 2003 041 895     US-A1- 2007 014 682**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a method to re-use the waste silicon powder recovered from band saws and other silicon mechanical operations for both photovoltaic and microelectronic industry, as feed material to prepare the crucible charges for casting of polycrystalline-multicrystalline silicon ingots usable for photovoltaic applications.

Photovoltaic technology (PV) is a well established reliable, renewable and environmentally benign source of clean electrical energy and the photovoltaic industry is expected to add tens of GW/year of additional power.

So far the photovoltaic industry has been using, and in a certain extent it is still using, as feedstock materials for solar cells the excess capacity in the high purity electronic grade polysilicon and the recycled waste from electronic grade silicon single-crystal industry (ingot tops/tails and broken wafers), with the built-in disadvantages of a limited and unreliable availability of silicon poly-crystalline at non competitive cost.

As photovoltaic industry is growing faster than microelectronic industry, the silicon raw material has become rarer and more expensive. To overcome the shortage of silicon for photovoltaic applications the following technologies capable to provide solar grade silicon have been developed and are at least in part already used:

- Changes to the set-up of the chemical production processes for electronic grade silicon via trichlorosilane, aimed to reduce the production costs by providing a polycrystalline with quality characteristics less stringent than those required by the micro-electronic industry, but at the same time well in line with the requirements of photovoltaic industry

- Direct purification of metallurgical silicon

- Carbon thermal reduction of quartz

However these additional technologies are not enough to satisfy the growing demand of solar grade silicon that has grown and will grow at the estimated rate of 25 % to 30 % per year. In conclusion there is not enough poly-silicon capacity to supply both microelectronic and photovoltaic markets.

In spite of the fact that the market is adjusting to these new requirements by installing additional polysilicon capacity, there will continue to be a silicon feedstock shortage over the next few years until the new capacity can match the growing demand.

It has been estimated that availability of solar grade polysilicon will not match the photovoltaic growth trend until 2010. As consequence of this situation there is the urgent need to find out new or alternative source of solar grade silicon.

This serious shortage of solar grade silicon at competitive price for the photovoltaic industry has pressed toward the development of techniques for the recovery and re-use of the silicon waste powder that is generated as kerf (micron-size silicon powder) at mechanical operations in photovoltaic and electronic industries.

In fact it has been estimated that the silicon kerf, that could be recovered as fine silicon powder is about up to 35 % of the total silicon that is fed as raw material in the processes for the production of solar cells.

The recycling of silicon rejects from PV and micro-electronic productions has been and still is the object of several research projects involving both european and governmental offices for the solar energy development and also some sawing equipment producers.

The key issues that any silicon powder recovery process has to solve are the following:

a) effective separation of silicon kerf from the waste water of band saws and grinders or from cakes or sludges coming from exhausted slurries from wire saws operations

b) avoiding the oxidation and hydrogen development of the kerf during operations

c) efficient removal of metal impurities at the level required by photovoltaic industry

d) serious difficulties when melting the recovered kerf because of the small size of the particles and their low density as well as their surface oxidation conditions.

No fully satisfactory solutions have been found so far relates to an economical and environmental benign method to recover cristalline silicon metal kerf from mechanical operations and melting of said recovered crystalline silicon kerf.

Regarding point a) of the issues that faces the industry nowadays it is interesting to mention the patent US 2003/0041895 which describes a method to re-use of the silicon from wire-saw operations in order to manufacturer thin layer PV cell.

The method to recovery silicon kerf and obtain material from PV applications consists of the following steps:

a) by means of a commercially available slurry recovery system, concentrate the silicon slurry into silicon sludge

b) recover the silicon kerf from the said sludge by means of froth flotation (or other separation-concentration techniques) and surfactants

c) the silicon kerf obtained by flotation or other concentration methods is mixed with an organic binder in order to produce a silicon kerf molding compound

d) the silicon kerf molding compound is shaped into thin-layer PV cell configuration

e) to remove the binder and sinter the binder free structure to its final dense configuration.

Document DD 240 729 A1 discloses a treatment of silicon powder recovered from band saws for the preparation of polycrystalline silicon for photovoltaic application, comprising the following steps:

a) first treatment of the silicon powder with hydrofluoric acid,

b) rinsing of the obtained silicon powder with high purity water,

c) second treatment of the silicon powder with a mixture of $NH_4OH/H_2O_2$ and $HCl/H_2O_2$,

d) final rinsing with high purity water.

US 2003/0041895 relates to the recovery of silicon kerf from wire saw slurries by mean of commercially available systems and of silicon flotation, with the final target to obtain by sintering a silicon thin layer structure to be directly used to build photovoltaic cells. Worth to mention that this invention does not address the issue of the high likelihood of silicon oxidation and that the purity of final product is not addressed either. The low flexibility of the method in terms of feedstock and products produced is a severe drawback either. Important to underline that the recovery of the silicon kerf coming from mechanical operations of silicon, such as band saws and grinders, where not considered in this application.

Regarding the points b), meaning avoiding the oxidation of silicon and point c) that is about contaminants level in the recovered silicon, the literature does not provide sound solutions.

At this very point the authors wanted to list the methods commonly used in the industry of semiconductors to clean silicon.

a) Piranha etching: $H_2SO_4$, $H_2O_2$, 4:1 at 90 °C, used mainly to remove organic contaminants

b) Hydrofluoric acid: silicon surface oxide is removed by HF dilute solutions or by buffered HF solutions; however when rinsing silicon with deionised water or exposing the cleaned surface to the air, a layer of native oxide is immediately grown (with a thickness of about 15 Anstrong)

c) Standard Clean 2 (SC-2): it is based on HCl, $H_2O_2$, $H_2O$ mixed with different ratios; its main task is the removal of metallic contaminations (to this purpose the recommended ratios are HCl : $H_2O_2$ : $H_2O$ = 1:1:5)

d) Standard Clean 1 (SC-1): it is based on $NH_4OH$, $H_2O_2$, $H_2O$ mixed with different ratios, while the classic formulation is 1:1:5, at 70 °C; its main task is the removal of multivalent metallic ions.

e) RCA wet cleaning process: it involves both SC-1 and SC-2 at 70 °C, where SC-1, due to ammonia, complexes many multivalent metal ions, while SC-2 due to its HCl content removes alkali and transitions metals.

All these methods do not solve the two listed issues because:

a) it is applied to standard wafers and silicon chunks or silicon rods and not to fine powder and this is crucial because the fine silicon powders typically shows a higher metals contamination level than silicon wafers or chunks, just because it has a much higher specific surface and typically it has been in contact with metallic tools and piping.

b) All the listed processes do cause the oxidation of treated silicon, including that with HF.

Herewith the authors wanted to discuss the literature that tries to address the purification (metal contamination) and the oxides removal topics.

US 2006/0042539 provides a pure water cleaning method that is applied after a preliminary etch of polycrystalline silicon chunks by means of a mixture of nitric and hydrofluoric acids.

The removal effects of the proposed method, with respect to certain types of metal ions, are extremely improved by using pure water that has been purified by combining reverse osmosis treatment and ion exchange treatment.

The patent does not guarantee the removal of oxide layer on the final product because the last step is a washing with clean water. Moreover it is used only for chunks of silicon and not for the more challenging powder (micro and sub-micro powder)

The patent CN 1947870 relates to a cleaning method for removing contaminants from the surface of rejected silicon pieces in order to re-use them. The following steps are described: immerse waste silicon pieces in alkali solution, flushing with purified water, drying, dip in a second alkali solution, flush with purified water, drying, immerging in solution containing HCl and $H_2O_2$, bubble with compressed air, rinse with purified water and bake. The authors of that patent claim the removal of dirt and contaminants from the surface of rejected Silicon scrap material, that typically have discrete sizes. On the other end the type of chemicals used and the baking applied at the end cause the formation of oxides.

CN 1947869 provides a cleaning method for removing the impurities from the surface of rejected silicon material in order to re-use it; it includes steps such as dipping the rejected silicon materials in a mixed solution of hydrofluoric acid and nitric acid, rinsing with purified water several times, dipping in purified water, measuring the electrical conductivity of the rinsing water and baking to dry. This patent does not solve the issues listed because of the high content of oxide on the surfaces. This is not a major concern for the authors because the application field is very different from that discussed in this application.

WO 2006126365 filed by Sumitomo provides a method for cleaning polycrystalline silicon with a high level of surface quality, suitable to be used as raw material for melting in the production of CZ silicon single-crystal for semiconductor applications or used for solar cells applications.

The advantages of the proposed process are: lower cleaning costs, reduction of silicon loss and of environmental issues related to the disposal of waste chemicals and of NOx gas. The drawbacks of this patent are due to the fact that this method is suitable for chunk but not for powder or kerfs because it would lead to a very low yield.

Process steps: polycrystalline silicon is cleaned with hydrofluoric acid to remove the contaminated oxide, followed by a light etching with fluor-nitric mixture or, more preferably the polycrystalline silicon is treated in a furnace with a clean gas containing water vapour, in order to grow an oxide film with no significant contamination left on the surface of the polycrystalline silicon.

The WO 2006126365 process target is to growth an oxide layer on the silicon surface, while present invention process claims to provide a surface oxide and metal contamination free silicon powder.

KR 20020065105 provides a method for recycling the silicon particles collected from the waste water of a saw process, with the target of obtaining high purity silica.

The purpose of the invention, including a cleaning step by mean of acetone, is aimed to obtain as final product, a high purity silica sol.

KR 20020065105 and the present invention relate to the same feedstock, that is silicon powder collected from waste water of silicon sawing process, but they have different targets, that are the production of silica sol for KR 20020065105 and purified silicon powder for melting application in the field of solar cells for the present invention.

TW 279393 B provides a method to purify silicon powder, by means of a treatment in a tank with an acid solution heated at a predetermined temperature and for predetermined period of time, with the support of a stirring system.

The powder is then separated from the acid solution and can be submitted to a second or to multiple acid corrosion treatment to obtain silicon powder with higher purity for silicon material to be used as substrate for solar cell.

The stirring system can be a mechanical one as well as an ultrasonic based system.

The cleaning process described by TW 279393 uses multiple steps of "acid corrosion" to etch off silicon not just to remove surface oxide; this means that some hydrofluoric acid is mixed with an oxidizing agent, while the process claimed in the present invention just removes surface oxide and the metals.

The cleaning process described by TW 289393 is performed with the support of a heating system and of a ultrasonic stirring system, while the process claimed by the present invention is run at room temperature.

TW 279393 claimed process does not have the target of providing a surface oxide free silicon powder, that is instead one of target of the present invention.

With regards to the issue called D), that is about the potential difficulties that one could face in the melting process of a silicon powder it is worth to mention the US 7,175,685 which describes a process for making silicon pellets by compaction of the high purity ultra fine silicon powder coming as by-product of the fluid bed process used to manufacture high purity electronic grade polysilicon or coming as reaction residues from preparation of chlorosilanes using elemental silicon and hydrogen chloride.

The target of the compaction is to make silicon pellets for melting applications.

To the purpose a controlled amount of silicon powder free from additives and binders is fed into a pellet die and compacted at room temperature and at high pressure to obtain pellets having a density from about 50 % to 75 % of theoretical density of silicon and specified size and weight.

US 7,175,685 relates to the recovery of the ultra fine silicon powder available as by-product from the fluid bed process used to manufacture high purity electronic grade polysilicon and to the re-use of said silicon powder for directly making silicon pellets for high purity silicon ingots production. The authors do not provide a solution to the melting of fine powder coming from the processes that this invention means to address. The present invention relates instead to the recovery and the re-use of waste silicon powder deriving as kerf from silicon mechanical operations.

US 2007014682 describes methods of compaction and densification high purity silicon powder to defined geometric forms and shapes; to the purpose high purity silicon powder is first mixed with a selected binders and pressed into desired shapes in a mechanical equipment.

The binder is removed either in separate step or combined with a subsequent sintering operation.

The patent relates to the recovery of the ultra fine silicon powder coming as by-product of the fluid bed process used to manufacture high purity electronic grade polysilicon or coming as reaction residues from the preparation of chlorosilanes using elemental silicon and hydrogen chloride and to the re-use of said silicon powder for directly making pellets to be used as feedstock in the photovoltaic industry. Therefore the feedstock is completely different as well as the problems that are considered from those addressed by the authors of the present invention.

As already said the present invention describes a process for the re-use of silicon powder recovered from band saws and other silicon mechanical operations at both photovoltaic and microelectronic industry, as feed material to prepare the crucible charges for casting of polycrystalline-multi-crystalline silicon ingots usable for photovoltaic applications.

In very general terms the process is characterised by the following steps:

a) silicon powder recovery from band saws / wire saws, grinding operations by filtration and by treatment of the exhausted slurries

b) conditioning in non-oxidizing environment

c) treatments with hydrofluoric acid

d) treatment with hydrochloric acid and/or hydrofluoric acid and hydrogen peroxide

e) second treatment with hydrofluoric acid

f) preparation for the compaction step

g) compaction of the silicon

In this section the authors wanted to go more in depth in the process steps description.

Most of the times the conditioning is done by addition of DI water and non-oxidant acid. Worth to mention that also the conditioning of silicon with ethanol or acetone or any other organic solvent compatible with strong acids (excluding $H_3PO_4$) could be used in either way with and without conditioning in HCl/water. Non-oxidant acids are, among the others, HCl, $H_2SO_4$, mono and dicarboxilic acids.

Re-slurry of cakes and/or sludges is done with DI water and hydrochloric acids, by using the following recipes and process conditions:

```
[Silicon content] : [HCl]  = [1] : [0,05-0,5] by weight
```

Next step is the treatment of said slurry with hydrofluoric acid: hydrofluoric acid is added in such a quantity to obtain the following ratios:

```
[Silicon content] : [HCl] : [HF]  =  [1] : [0,05-0,5] :
[0.01-1] by weight
```

After the treatment the slurry is filtrated and the filtration cake is washed with DI water; afterwards the cake is treated with DI water in order to re-slurry. Treatment of said slurry with hydrochloric acid and hydrogen peroxide, with the following recipes

```
[Silicon content] : [HCl] : [H2O2] =  [1] : [0,05-0,5] :
[0,05-0,2] by weight
```

After the treatment the slurry is filtrated and the filtration cake is washed with DI water and then re-slurried with D.I. water.

Alternativey to the treatment with HCl/H2O2 the authors recognize that this very step can be carried out also with HF/H2O2. More in detail: the slurry undergoes the following treatment with hydrofluoric acid and hydrogen peroxide, with the following recipes:

```
[Silicon content] :  [HF] : [H2O2] =  [1] : [0,01 - 0,1] :
[0,05-0,5] by weight.
```

Afterwards comes a re-slurry step with DI and then the treatment of said slurry with hydrofluoric acid with the following recipes

```
[Silicon content] : [HF] = [1] : [0,05-0,15] by weight.
```

After the treatment the slurry is filtrated and afterwards the acid cake is dried under vacuum / nitrogen to prevent the oxidation of the silicon particles. The authors wanted to underline that the acidic cake could be also treated with alcohol in order to obtain a "wet-cake".

At the end of the process comes the melting / casting charges preparation, herewith the authors propose three methods. The first is based on Vacuum-Nitrogen silicon powder compaction process, applied to the decontaminated and dried silicon kerf directly inside any industrially available casting crucible, ready for transportation and melting.

The second method is a compaction process of the recovered, decontaminated and dried silicon powder by means of an industrially available binders free compaction process that has as output some compacted silicon pellets or discs suitable as silicon casting charges.

The third is about a sol-gel based method that leads to green bodies that can be shaped directly into the crucible.

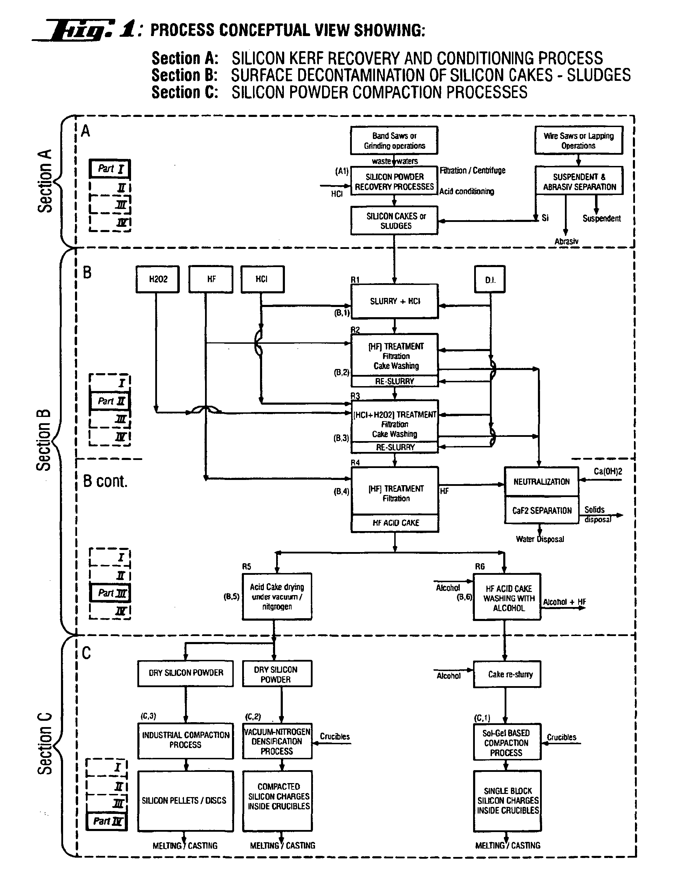

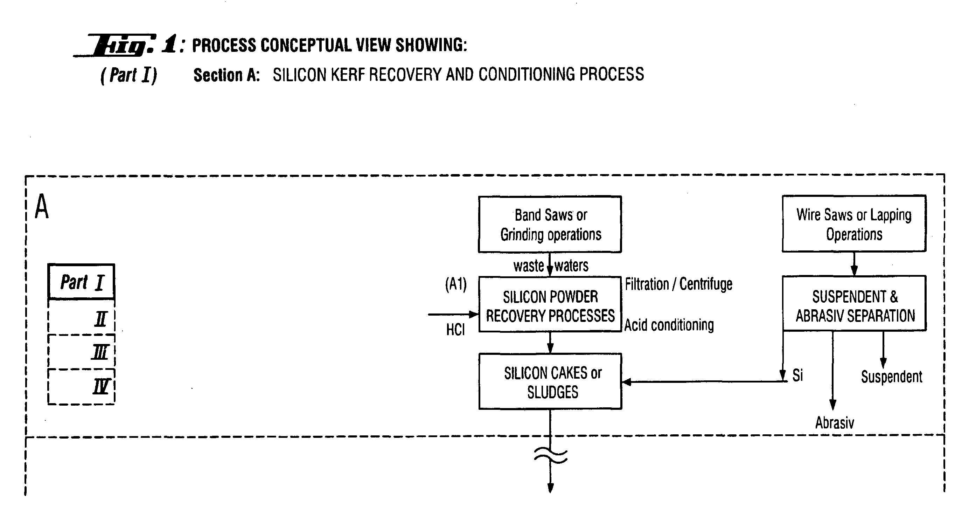

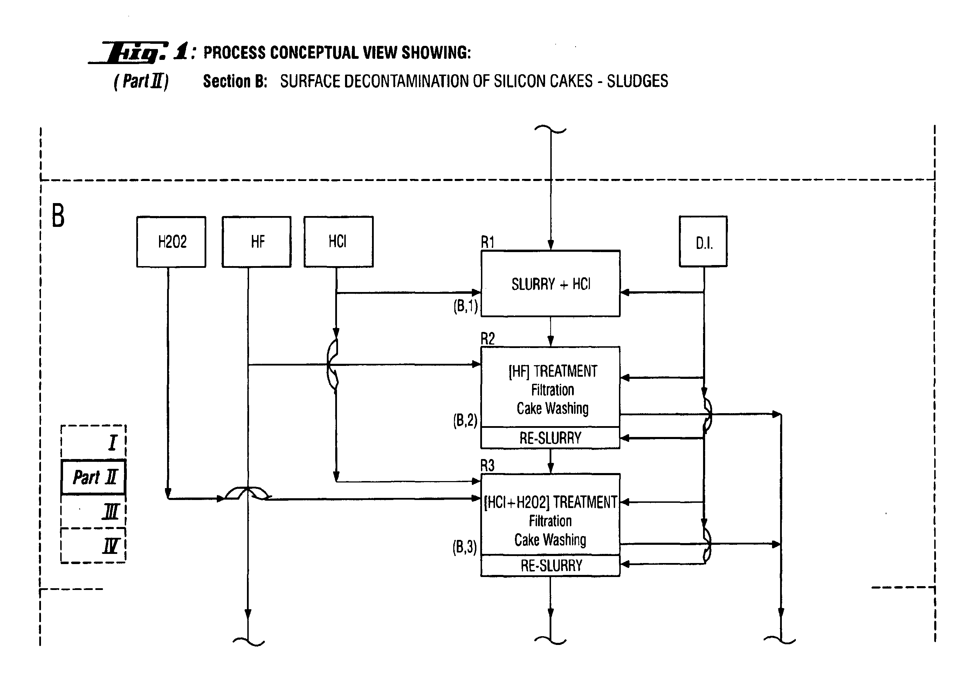

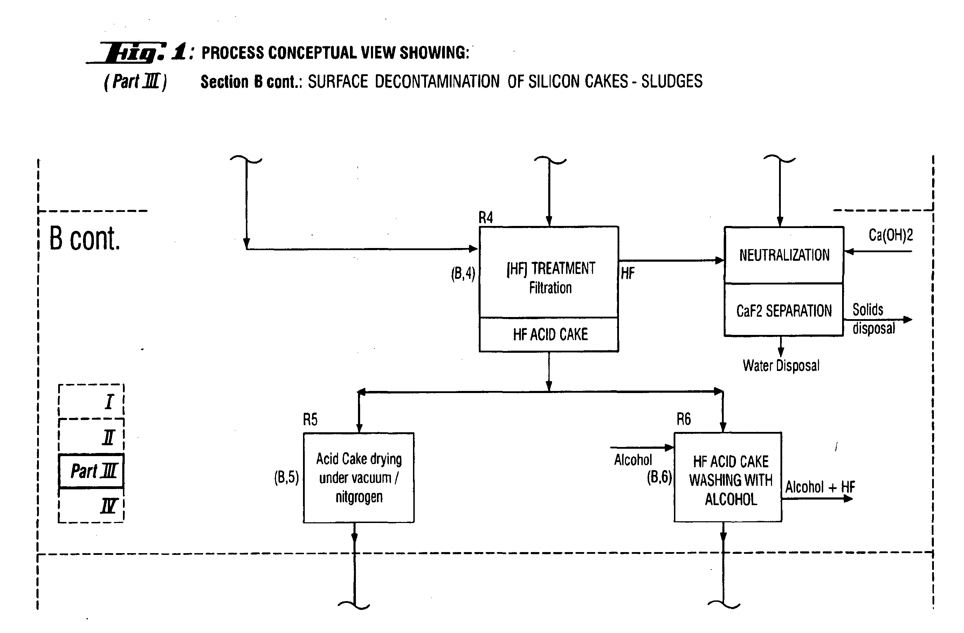

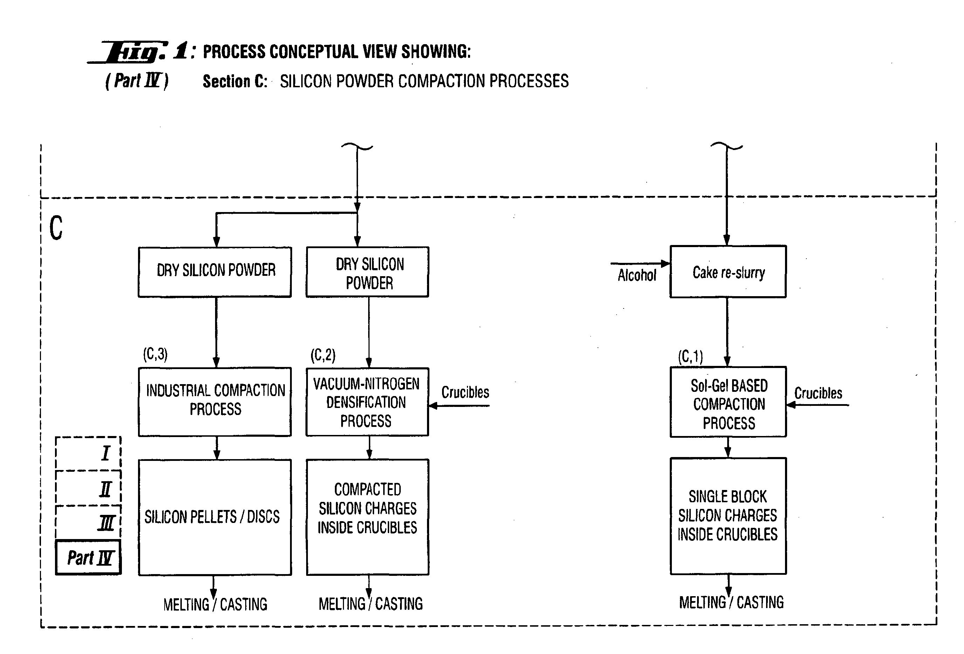

The techniques described in this invention, can be according to Figure 1 summarized as follows:

1.1 Recover the silicon powder from the waste waters of silicon mechanical operations of photovoltaic and micro-electronic industries and from cakes or sludges coming from the exhausted wire saw slurries after separation of suspending agents and abrasives.
see Figure 1, section A

1.2 Chemical Conditioning of the recovered silicon powder to control the oxidation of the powder for safe transportation and storing of the silicon powder.
see Figure 1, section A

1.3 Decontamination of surface impurities of recovered and conditioned silicon powders.
see Figure 1, section B

1.4 Compaction method number 1: treating the purified silicon powder with a vacuum-nitrogen densification process for the preparation of compacted silicon powder charges directly inside standard size casting crucibles.

In the details the steps characterising the methods are:

a) dry silicon powder is added inside an industrial standard casting crucible that is maintained under nitrogen environment

b) the crucible filled with the silicon dry powder is put under vacuum, until the vacuum reaches the values in the range (20-60) kPa

c) by means of a nitrogen flow at room temperature, the vacuum of the environment containing the crucible filled with the silicon powder is released and the pressure is raised to the value of about 1 bar; in its path through the silicon particles, nitrogen creates a drag effect on the silicon particles, yielding a consistent compaction of the silicon powder (reduction to 60%-70% of initial volume).

see Figure 1, section C

1.5 Compaction method number 2: treating the purified silicon powder with an industrially available binder free compaction process for the preparation of silicon pellets or discs. In detail the steps are: the dry silicon powder under nitrogen is used as feed for this compaction process for charges preparation. The dry silicon powder, kept under nitrogen to prevent oxidation, can be used as feedstock for one of the industrially available compaction processes, without binding agent, to make silicon pellets or discs

see Figure 1, section C

1.6 Compaction method number 3: preparation of green bodies out of the purified silicon powder by means of sol-gel techniques.

The sol-gel based method is the only for which either the dried powder or the wet (with alcohol) powder are suitable. Sol-gel based method is based on the following steps: as feed can be used both alcohol containing material or dried powder, the feed is then mixed with an alcoholic solution containing a silane and then kept under stirring. The green body so formed is then dried till the organic content level complies with the requirements defined by the silicon smelters.

see Figure 1, section C

The effectiveness of the silicon powder compaction processes described below of this invention, varies widely according to the process used, as hereafter indicated:

a) sol-gel based compaction: the density of the body is the range 0,9-1,4 gr/cm3

b) Vacuum-Nitrogen compaction process: the volume of the silicon powder after compaction is reduced to 60%-70% of the initial volume and the density is increased in the range 08-1,0 gr/cm3.

c) tabletting compaction process: the final density of the pellets is abut 60-70% of the density of the elemental silicon.

The authors wanted to underline that the compaction step by sol-gel can be done directly in a mold. Once that the silicon has been compacted in the mold comes the transfer of the compacted silicon in a crucible or alternatively the authors do not rule out the possibility to carry out the process directly in the crucible.

As already said after the compaction step the silicon is molten in the crucible that most of times is made of pure silica. A problem that the operator could face in performing such melting step is due to the difference in terms of thermal coefficient between silicon and silica and this could lead to a stress into the crucible that causes breakage of silica crucible and leakage. The silicon thermal expansion coefficient is about $1*10(-6)°C$ whereas for silica it is $0.55*10(-6)°C$. This is particular likely for those compaction methods that allow to fill the crucible at its maximum capacity.

A possible solution to this very issue that the author would like to describe is the use of an inner mold for the crucible. More in detail: in order to avoid that the silicon by melting causes the stress on the crucible mold the author suggest to have some cavities created before the compaction step is complete. The cavities would be created by means of the inner mold in a way similar to that described in the patent WO2007 065766, where are listed some inner molds suitable for the making of silica glass by means of sol-gel techniques. The created cavities work as "buffer" in order to give some space to the silicon to swell and not create stress on the crucible.

Here the authors would like to give some more insights on the inner molds features. The inner molds can be extracted before the melting step and when the compaction step is at completion but special care has to be put at the issue of the adhesion of the compacted silicon to the mold. The mold could be removed by mechanical extraction, especially if the mold is stiff, or by deflating the mold in case have been used inflatable molds or by melting the molds and extracting the melt (by sucking). The inner mold can be made of: plastic, glass, metal, waxes and silica glass among the others.

The following examples are illustrative and not to be considered as limited of the invention described in the claims.

**EXAMPLES 1**

**Step 1: (A1 in scheme attached)**

The filtration cake is washed with a diluted solution of hydrochloric acid and maintained at pH of (3,5-4,5) to prevent the reaction of the silicon powder with water that generates hydrogen.
The water content of the filtration cakes is typically in the range 20 % - 60 %.

**Step 2 (B,1 in the attached scheme):**

The recovered silicon powder is sent to the re-slurry, either as cake from filtration or sludges from centrifugal treatment or as dry powder; the re-slurry operation is made by addition of DI water and Hydrochloric acid; the ratios among the chemicals used in the re-slurry are shown herafter : [Silicon content] : [HCl] = [1] : [0,2] by weight.
DI water is added in such a quantity to adjust the density of the slurry in the range 200-400 gr/l.

**Step 3 (B,2 in the attached scheme):**

The slurry coming from step 2, is sent to Reactor R2 (see scheme) and then mixed with hydrofluoric acid in such a quantity to obtain the following ratios by weight:

[Silicon content] : [HCl] : [HF] = [1] : [0,2] : [0,5]

DI water is adjusted to control the density in the range 200-400 gr/l.

Treatment Conditions for step 3:

    a) Stirring: continuous

    b) Temperature: 20 - 40 °C

    c) treatment time: 1 hour

After the treatment the slurry is sent to filtration and the resulting silicon cake is washed with D.I.

**Step 4 (B,3 in the scheme):**

The slurry coming from step 3, is mixed with hydrochloric acid and with hydrogen peroxide in such a quantity to obtain the following ratios by weight:

```
[Silicon content] :  [HCl] : [H2O2] =  [1] : [0,2] : [0,1]
by weight.
```

DI water is adjusted to control the density of the slurry in the range 200-400 gr/l.
Treatment Conditions for step 4:

    a) Stirring: continuous

    b) Temperature: 20 - 40 °C

    c) treatment time: 1 hour

After the treatment the slurry is filtrated and the filtration cake is washed with DI water; liquids from filtration and washing containing HCl and $H_2O_2$, are sent to a neutralization tank, which contains $Ca(OH)_2$ in a water solution.
The process step ends with the Re-Slurry of the silicon cake with D.I. water.

**Step 5 (B,4 in the scheme):**

Slurry coming from reactor R3 is again mixed with hydrofluoric acid in such a quantity to obtain the following ratios by weight:

```
[Silicon content]  :  [HF]  =  [1] : [0,1]  by weight
```

Treatment Conditions :

a) Stirring: continuous

b) Temperature: 20 - 40 °C

c) treatment time: 1 hour

DI water is adjusted to control the density of the slurry in the range 200-400 gr/l.

After treatment the slurry is filtrated and the filtration cake, wet by hydrofluoric acid, is sent directly to the cake drying step, while the liquid from filtration and washing, containing hydrofluoric acid is sent to the neutralization tank.

**Step 6 (B,5 in the scheme):**

The silicon cake from process step (B,4 see scheme) kept acidic by HF to prevent the oxidation of the silicon particles by water and air and is dried under vacuum:

a) Vacuum values: 20 mBar, in nitrogen atmosphere

b) Temperature: 70 °C by RF heating

c) at the end of the drying cycle vacuum is released in nitrogen atmosphere.

**Step 7 (sol-gel method)**

0.7 g of tetramethoxysilane are mixed with 5 g ethanol and 1 g water and the solution so obtained is kept under stirring until complete hydrolysis of tetramethoxysilane occurs (solution becomes completely transparent). Then 14 g of silicon powder are added to the silane-based premix (weight ratio 1:0,49) and kept under stirring. The sludge so obtained is then poured in the mold. The whole process is conducted under nitrogen. Before the start of the drying phase the sample is kept in a sealed container at room temperature for the consolidation of the green body.
Silicon body is then dried under ventilated hood for 3 days. The product has been characterized by means of XRD spectroscopy that has shown that the content of $SiO_2$ in the silicon product raised only of 0.5 wt% because of the described treatment.
The advantage of the process described in this example is that the green body is obtained already inside the casting crucibles; as the green body withstand mechanical stresses due to handling, meaning that it can be easily packed, shipped and used directly in final casting facilities for melting without any further treatment.

**EXAMPLES 2**

**Step 1: (A1 in scheme attached)**

The filtration cake is washed with a diluted solution of hydrochloric acid and maintained at pH of (3,5-4,5) to prevent the reaction of the silicon powder with water that generates hydrogen.
The water content of the filtration cakes is typically in the range 20 % - 60 %.

**Step 2 (B,1 in the attached scheme):**

The recovered silicon powder is sent to the re-slurry, either as cake from filtration or sludges from centrifugal treatment or as dry powder; the re-slurry operation is made by addition of DI water and Hydrochloric acid; the ratios among the chemicals used in the re-slurry are shown herafter : [Silicon content] : [HCl] = [1] : [0,2] by weight.
DI water is added in such a quantity to adjust the density of the slurry in the range 200-400 gr/l.

**Step 3 (B,2 in the attached scheme):**

The slurry coming from step 2, that is already acid because of the hydrochloric already added at step B,1, is sent to Reactor R1 and then added with hydrofluoric acid in such a quantity to obtain the following ratios by weight:

[Silicon content] : [HCl] : [HF] = [1] : [0,2] : [0,5]

DI water is adjusted to control the density in the range 200-400 gr/l.

Treatment Conditions for step 3:

a) Stirring: continuous

b) Temperature: 20 - 40 °C

c) treatment time: 1 hour

After the treatment the slurry is sent to filtration and the resulting silicon cake is washed with D.I, re-slurried with DI adjusting the density to the range 200-400 gr/l and sent to reactor R3.

**Step 4 (B,3 in the scheme):**

The slurry (2) coming from reactor R2, is added with hydrofluoric acid and with hydrogen peroxide in such a quantity to obtain the following ratios by weight:

```
[Silicon content] :  [HF] : [H2O2] =  [1] : [0,4] : [0,15]
by weight.
```

DI water is adjusted to control the density of the slurry in the range 200-400 gr/l.

Treatment Conditions:

a) Stirring: continuous

b) Temperature: 20 - 40 °C

c) treatment time: 1 hour

After the treatment the slurry is filtrated and the filtration cake is washed with Deionised water; liquids from filtration and washing containing HF and $H_2O_2$, are sent to a neutralization tank.
The process step (B3) ends with the Re-Slurry of the Silicon cake with D.I. water, adjusting the density of the slurry in the range 200-400 gr/l (slurry 3).

**Step 5 (B,4 in the scheme):**

Slurry coming from reactor R3 is again added with hydrofluoric acid in such a quantity to obtain the following ratios by weight:

```
[Silicon content] : [HF] = [1] : [0,1] by weight
```

Treatment Conditions:

a) Stirring: continuous

b) Temperature: 20 - 40 °C

c) treatment time: 1 hour

DI water is adjusted to control the density of the slurry in the range 200-400 gr/l.

After treatment the slurry is filtrated and the filtration cake, wet by hydrofluoric acid, is sent directly to the cake drying step, while the liquid from filtration and washing, containing hydrofluoric acid is sent to the neutralization tank.

**Step 6 (B,5 in the scheme):**

The silicon cake from process step (B,4) kept acidic by HF to prevent the oxidation of the silicon particles by water and air is dried under vacuum:

a) Vacuum values: 20 mBar, in nitrogen atmosphere

b) Temperature: 70 °C by RF heating

c) at the end of the drying cycle the vacuum is released in nitrogen atmosphere.

**Step 7 (sol-gel method)**

0.7 g of tetramethoxysilane are mixed with 5 g ethanol and 1 g water and the solution so obtained is kept under stirring until complete hydrolysis of tetramethoxysilane occurs (solution becomes completely transparent). Then 14 g of silicon powder are added to the silane-based premix (weight ratio 1:0,49) and kept under stirring. The sludge so obtained is then poured in the mold. The whole process is conducted under nitrogen. Before the start of the drying phase the sample is kept in a sealed container at room temperature for the consolidation of the green body. Silicon body is then dried under ventilated hood for 3 days. The product has been characterized by means of XRD spectroscopy that has shown that the content of $SiO_2$ in the silicon product raised only of 0.5 wt% because of the described treatment.
The advantage of the process described in this example is that the green body is obtained already inside the casting crucibles; as the green body is very stable and can withstand mechanicals stresses, it can be easily packed, shipped and used directly in final casting facilities for melting without any further treatment.

**EXAMPLES 3**

**Step 1: (A1 in scheme attached)**

The filtration cake is washed with a diluted solution of hydrochloric acid and maintained at pH of (3,5-4,5) to prevent the reaction of the silicon powder with water that generates hydrogen.
The water content of the filtration cakes is typically in the range 20 % - 60 %.

**Step 2 (B,1 in the attached scheme):**

The recovered silicon powder is sent to the re-slurry, either as cake from filtration or sludges from centrifugal treatment or as dry powder; the re-slurry operation is made by addition of DI water and hydrochloric acid; the ratios among the chemicals used in the re-slurry are shown herafter : [Silicon content] : [HCl] = [1] : [0,2] by weight.

DI water is added in such a quantity to adjust the density of the slurry in the range 200-400 gr/l.

**Step 3 (B,2 in the attached scheme):**

The slurry coming from step 2, that is already acid because of the hydrochloric already added at step B,1, is sent to Reactor R1 and then added with hydrofluoric acid in such a quantity to obtain the following ratios by weight:

```
[Silicon content] : [HCl] : [HF] = [1] : [0,2] : [0,5]
```

DI water is adjusted to control the density in the range 200-400 gr/l.

Treatment Conditions for step 3:

a) Stirring: continuous

b) Temperature: 20 - 40 °C

c) treatment time: 1 hour

After the treatment the slurry is sent to filtration and the resulting silicon cake is washed with D.I, re-slurried with DI adjusting the density to the range 200-400 gr/l and sent to reactor R3.

**Step 4 (B,3 in the scheme):**

The slurry (2) coming from reactor R2, is added with hydrofluoric acid and with hydrogen peroxide in such a quantity to obtain the following ratios by weight:

```
[Silicon content] :  [HF] : [H2O2] =  [1] : [0,4] : [0,15]
by weight.
```

DI water is adjusted to control the density of the slurry in the range 200-400 gr/l.

Treatment Conditions:

a) Stirring: continuous

b) Temperature: 20 - 40 °C

c) treatment time: 1 hour

After the treatment the slurry is filtrated and the filtration cake is washed with Deionised water; liquids from filtration and washing containing HF and $H_2O_2$, are sent to a neutralization tank.
The process step (B3) ends with the Re-Slurry of the Silicon cake with D.I. water, adjusting the density of the slurry in the range 200-400 gr/l (slurry 3).

**Step 5 (B,4 in the scheme):**

Slurry coming from reactor R3 is again added with hydrofluoric acid in such a quantity to obtain the following ratios by weight:

```
[Silicon content]  :  [HF]  =  [1] : [0,1]  by weight
```

Treatment Conditions:

a) Stirring: continuous

b) Temperature: 20 - 40 °C

c) treatment time: 1 hour

DI water is adjusted to control the density of the slurry in the range 200-400 gr/l.

After treatment the slurry is filtrated and the filtration cake, wet by hydrofluoric acid, is sent directly to the cake drying step, while the liquid from filtration and washing, containing hydrofluoric acid is sent to the neutralization tank.

**Step 6 (B,6 in the scheme):**

The silicon cake from process step (B,4) kept acidic by HF to prevent the oxidation of the silicon particles by water and air is washed wth a alcoholic solution made of ethanol and water in ratio by weight 95:5

**Step 7 (sol-gel method)**

0.7 g of tetramethoxysilane are mixed with 5 g ethanol and 1 g water and the solution so obtained is kept under stirring until complete hydrolysis of tetramethoxysilane occurs (solution becomes completely transparent). Then 17 g of wet silicon coming from step 6 are added to the silane-based premix (weight ratio 1:0,49) and kept under stirring. The sludge so obtained is then poured in the mold. The whole process is conducted under nitrogen. Before the start of the drying phase the sample is kept in a sealed container at room temperature for the consolidation of the green body. Silicon body is then dried under ventilated hood for 3 days. The product has been characterized by means of XRD spectroscopy that has shown that the content of $SiO_2$ in the silicon product raised only of 0.5 wt% because of the described treatment.

The advantage of the process described in this example is that the green body is obtained already inside the casting crucibles; as the green body is very stable and can withstand mechanicals stresses, it can be easily packed, shipped and used directly in final casting facilities for melting without any further treatment.

**EXAMPLES 4**

**Step 1: A1 in scheme attached)**

The filtration cake is washed with a diluted solution of hydrochloric acid and maintained at pH of (3,5-4,5) to prevent the reaction of the silicon powder with water that generates hydrogen.

The water content of the filtration cakes is typically in the range 20 % - 60 %.

**Step 2 (B,1 in the attached scheme):**

The recovered silicon powder is sent to the re-slurry, either as cake from filtration or sludges from centrifugal treatment or as dry powder; the re-slurry operation is made by addition of DI water and Hydrochloric acid; the ratios among the chemicals used in the re-slurry are shown hereafter : [Silicon content] : [HCl] = [1] : [0,2] by weight.

DI water is added in such a quantity to adjust the density of the slurry in the range 200-400 gr/l.

**Step 3 (B,2 in the attached scheme):**

The slurry coming from step 2, that is already acid because of the hydrochloric already added at step B,1, is sent to Reactor R1 and then added with hydrofluoric acid in such a quantity to obtain the following ratios by weight:

$$[\text{Silicon content}] : [\text{HCl}] : [\text{HF}] = [1] : [0,2] : [0,5]$$

DI water is adjusted to control the density in the range 200-400 gr/l.

Treatment Conditions for step 3:

a) Stirring: continuous

b) Temperature: 20 - 40 °C

c) treatment time: 1 hour

After the treatment the slurry is sent to filtration and the resulting silicon cake is washed with D.I, re-slurried with DI adjusting the density to the range 200-400 gr/l and sent to reactor R3.

**Step 4 (B,3 in the scheme) / case B:**

The slurry (2) coming from reactor R2, is added with hydrofluoric acid and with hydrogen peroxide in such a quantity to obtain the following ratios by weight:

$$[\text{Silicon content}] : [\text{HF}] : [\text{H2O2}] = [1] : [0,4] : [0,15]$$
$$\text{by weight.}$$

DI water is adjusted to control the density of the slurry in the range 200-400 gr/l.

Treatment Conditions:

a) Stirring: continuous

b) Temperature: 20 - 40 °C

c) treatment time: 1 hour

After the treatment the slurry is filtrated and the filtration cake is washed with Deionised water; liquids from filtration and washing containing HCl and $H_2O_2$, are sent to a neutralization tank (containing Ca(OH)2).
The process step (B3) ends with the Re-Slurry of the Silicon cake with D.I. water, adjusting the density of the slurry in the range 200-400 gr/l (slurry 3).

**Step 5 (B, 4 in the scheme):**

Slurry coming from reactor R3 is again added with hydrofluoric acid in such a quantity to obtain the following ratios by weight:

$$[\text{Silicon content}] : [\text{HF}] = [1] : [0,1] \quad \text{by weight}$$

Treatment Conditions:

a) Stirring: continuous

b) Temperature: 20 - 40 °C

c) treatment time: 1 hour

DI water is adjusted to control the density of the slurry in the range 200-400 gr/l.
After treatment the slurry is filtrated and the filtration cake, wet by hydrofluoric acid, is sent directly to the cake drying step, while the liquid from filtration and washing, containing hydrofluoric acid is sent to the neutralization tank.

**Step 6 (B,5 in the scheme):**

The silicon cake from process step (B,4) kept acidic by HF to prevent the oxidation of the silicon particles by water and air and is dried under vacuum:

a) Vacuum values: 20 mBar, in nitrogen atmosphere

b) Temperature: 70 °C by RF heating

c) at the end of the drying cycle the vacuum is released in nitrogen atmosphere.

**Step 7 (vacuum-nitrogen method)**

The process describes the method for the compaction of the dry, oxide free silicon powders coming from process step (B,5); it is based on the densification capacity of a gas, in this case nitrogen, when it makes its path through the mass of dry silicon particles, kept in a vacuum environment.
The choice of nitrogen is due to the need of avoiding any oxidation of the silicon particles.

Compaction process, steps description:

a) the dry silicon powder is poured inside an industrial standard casting crucible that is maintained under nitrogen environment

b) the crucible filled with the silicon dry powder is put under vacuum, until the vacuum reaches the values in the range 30 kPa

c) by mean of a nitrogen flow at room temperature, the vacuum of the environment containing the crucible filled with the silicon powder is released until the pressure is raised to the value of 1 bar.

In its path through the silicon particles, nitrogen creates a drag effect on the silicon particles, yielding a consistent compaction of the silicon powder (reduction to 60%-70% of initial volume).

**EXAMPLES 5**

**Step 1 (A1 in scheme attached)**

The filtration cake is washed with a diluted solution of hydrochloric acid and maintained at pH of (3,5-4,5) to prevent the reaction of the silicon powder with water that generates hydrogen.
The water content of the filtration cakes is typically in the range 20 % - 60 %.

**Step 2 (B,1 in the attached scheme):**

The recovered silicon powder is sent to the re-slurry, either as cake from filtration or sludges from centrifugal treatment or as dry powder; the re-slurry operation is made by addition of DI water and Hydrochloric acid; the ratios among the chemicals used in the re-slurry are shown herafter : [Silicon content] : [HCl] = [1] : [0,2] by weight.
DI water is added in such a quantity to adjust the density of the slurry in the range 200-400 gr/l.

**Step 3 (B,2 in the attached scheme):**

The slurry coming from step 2, that is already acid because of the hydrochloric already added at step B,1, is sent to Reactor R1 and then added with hydrofluoric acid in such a quantity to obtain the following ratios by weight:

```
[Silicon content] : [HCl] : [HF] = [1] : [0,2] : [0,5]
```

DI water is adjusted to control the density in the range 200-400 gr/l.

Treatment Conditions for step 3:

   a) Stirring: continuous

   b) Temperature: 20 - 40 °C

   c) treatment time: 1 hour

After the treatment the slurry is sent to filtration and the resulting silicon cake is washed with D.I, re-slurried with DI adjusting the density to the range 200-400 gr/l and sent to reactor R3.

**Step 4 (B,3 in the scheme) / case B:**

The slurry (2) coming from reactor R2, is added with hydrofluoric acid and with hydrogen peroxide in such a quantity to obtain the following ratios by weight:

```
[Silicon content] :  [HF] : [H2O2] =  [1] : [0,4] : [0,15]
by weight.
```

DI water is adjusted to control the density of the slurry in the range 200-400 gr/l.

Treatment Conditions:

   a) Stirring: continuous

   b) Temperature: 20 - 40 °C

   c) treatment time: 1 hour

After the treatment the slurry is filtrated and the filtration cake is washed with Deionised water; liquids from filtration and washing containing HCl and $H_2O_2$, are sent to a neutralization tank.
The process step (B3) ends with the Re-Slurry of the Silicon cake with D.I. water, adjusting the density of the slurry in the range 200-400 gr/l (slurry 3).

**Step 5 (B,4 in the scheme):**

Slurry coming from reactor R3 is again added with hydrofluoric acid in such a quantity to obtain the following ratios by weight:

```
[Silicon content]  :  [HF]  =  [1] : [0,1]  by weight
```

Treatment Conditions:

a) Stirring: continuous

b) Temperature: 20 - 40 °C

c) treatment time: 1 hour

DI water is adjusted to control the density of the slurry in the range 200-400 gr/l.
After treatment the slurry is filtrated and the filtration cake, wet by hydrofluoric acid, is sent directly to the cake drying step, while the liquid from filtration and washing, containing hydrofluoric acid is sent to the neutralization tank.

**Step 6 (B,5 in the scheme):**

The silicon cake from process step (B,4) kept acidic by HF to prevent the oxidation of the silicon particles by water and air and is dried under vacuum:

a) Vacuum values: 20 mBar, in nitrogen atmosphere

b) Temperature: 70 °C by RF heating

c) at the end of the drying cycle the vacuum is released in nitrogen atmosphere.

**Step 7 (pelletisation/tabletting method)**

The dry silicon powder, kept under nitrogen to prevent oxidation, can be used as feedstock for one of the industrially available compaction processes, without binding agent.
The chemical cleaning with hydrofluoric acid applied to the silicon powders according to section (4.2) of this invention, provides an oxide-free silicon particles that are suitable for the fabrication of compacted silicon pellets or discs by mean of high pressure at room temperature.
The density of the pellets obtained with this process is about 60-70% of the density of the elemental silicon; they can be used stand alone or mixed with silicon nuggets for the charges preparation for casting applications.

**Claims**

**1.** A process for the re-use of silicon powder recovered from band saws and other silicon mechanical operations, as feed material to prepare the crucible charges for casting of polycrystalline-multicrystalline silicon ingots usable for photovoltaic applications,which process is **characterised by** the following steps:

a) silicon powder recovery from band saws, wire saws, grinding operations by filtration or centrifugal agglomeration and treatment of the exhausted slurries;
b) conditioning in non-oxidizing environment;
c) treatment with hydrofluoric acid;
d) treatment with hydrochloric acid and/or hydrofluoric acid and hydrogen peroxide;
e) second treatment with hydrofluoric acid;
f) preparation for the compaction step by drying under vacuum and inert gas, or by washing with an organic solvent;
g) compaction of the silicon powder.

**2.** A process according to claim 1 **characterized in that** the chemical conditioning, step b), to prevent the oxidation of the cakes and/or sludges recovered from step a), is performed at pH between -0,5 and 5,5 and more preferably between 3 and 5, by means of a non-oxidising acid such as a mineral acid, mono carboxylic and dicarboxylic organic acids.

**3.** A process according to claim 1 **characterized in that** the chemical conditioning, step b), to prevent the oxidation of the cakes and/or sludges recovered from step a), is performed with an organic solvent not acid sensitive, such as, acetone, ether, ethanol, propanol, iso-propanol, methanol, butanol.

4. A process according to claim 1 **characterized in that** the chemical conditioning, step b), to prevent the oxidation of the cakes and/or sludges recovered from step a), is performed in two steps: first a conditioning in an organic solvent not acid sensitive, such as, acetone, ether, ethanol, propanol, iso-propanol, methanol, butanol followed by a conditioning in a non-oxidising acid such as a mineral acid, organic acid, such organic acid can be monocarboxylic or dicarboxylic.

5. A process according to claim 1 **characterized in that** the treatment with hydrofluoric acid, step c), is performed in a way where the ratio Si and HF is [1]: [between 0.01 and 1] by weight.

6. A process according to claim 1 **characterized in that** the treatment d) with hydrofluoric acid and hydrogen peroxide is performed in a way where the ratios Si:HCl:H2O2 are [1]:[from 0,05 to 0,5]: [from 0,05 to 0,2] by weight.

7. A process according to claim 1 **characterized in that** the treatment d) with hydrofluoric acid and hydrogen peroxide is performed in a way where the ratios Si:HF:H2O2 are [1]:[from 0,01 to 0,1]: [from 0,05 to 0,5] by weight.

8. A process according to claim 1 **characterized in that** the second treatment with hydrofluoric acid, step e), is performed in a way where the ratio Si: HF is [1] : [from 0,05 to 0,15].

9. A process according claim 1 **characterized in that** the treatment f) of preparation for the compaction step is performed under inert gases or vacuum and the temperature is raised up to 100°C.

10. A process according to claim 1 **characterized in that** the treatment f) of preparation for the compaction step is performed by washing the silicon cake with ethanol, isopropanol, butanol, methanol, ether or a mixture thereof.

11. A process according to claim 1 **characterized in that** the compaction step, g), is performed in a mold.

12. A process according to claim 11 **characterized in that** the mold is a crucible made of silica.

13. A process according claim 11 **characterized in that** the mold has inner mold that can be removed.

14. A process according to claim 13 **characterized in that** the mold is inflatable.

15. A process according to claim 13 **characterized in that** the mold is water soluble and/or ethanol soluble and/or acetone soluble.

16. A process according to claim 13 **characterized in that** the mold is **characterized by** a melting point lower than 150 ° C.

17. A process according to claim 1 **characterized in that** the compaction step g) is performed following the steps hereafter listed:

    a) dried silicon powder is added inside an industrial standard casting crucible that is maintained under nitrogen environment;
    b) the crucible filled with the silicon dry powder is put under vacuum, until the vacuum reaches the values in the range (20-60) kPa;
    c) by means of a nitrogen flow at room temperature, the vacuum of the environment containing the crucible filled with the silicon powder is released and the pressure is raised to the value of about 1 bar; in its path through the silicon particles, nitrogen creates a drag effect on the silicon particles, yielding a consistent compaction of the silicon powder.

18. A process according to claim 1 **characterized in that** the compaction step g) is performed by tabletting or pelletizing the dried silicon powder.

**EP 2 303 776 B1**

**Patentansprüche**

1. Verfahren zur Wiederverwendung von Siliciumpulver, das von Bandsägen und anderen mechanischen Arbeitsvorgängen mit Silicium erhalten wurde, als Beschickungsmaterial, um die Tiegelinhalte für das Gießen von polykristallinen-multikristallinen Siliciumbarren, verwendbar für photovoltaische Anwendungen, bereitzustellen, welches Verfahren **gekennzeichnet ist durch** die folgenden Schritte:

   a) Siliciumpulvergewinnung von Bandsägen, Drahtsägen, Schleifvorgängen **durch** Filtration oder Agglomeration durch Zentrifugation und Behandlung der verbrauchten Schlämme;
   b) Konditionierung in einer nicht-oxidierenden Umgebung;
   c) Behandlung mit Fluorwasserstoffsäure;
   d) Behandlung mit Salzsäure und/oder Fluorwasserstoffsäure und Wasserstoffperoxid;
   e) zweite Behandlung mit Fluorwasserstoffsäure;
   f) Vorbereitung für den Kompaktierungsschritt **durch** Trocknen unter Vakuum und Inertgas oder **durch** Waschen mit einem organischen Lösungsmittel;
   g) Kompaktierung des Siliciumpulvers.

2. Verfahren nach Anspruch 1, **dadurch gekennzeichnet, dass** die chemische Konditionierung, Schritt b), zur Verhinderung der Oxidation der Kuchen und/oder Schlämme, die aus Schritt a) erhalten wurden, bei einem pH Wert zwischen -0,5 und 5,5 und bevorzugter zwischen 3 und 5 mittels einer nicht-oxidierenden Säure, wie zum Beispiel eine Mineralsäure, organische Monocarbonsäuren und Dicarbonsäuren, durchgeführt wird.

3. Verfahren nach Anspruch 1, **dadurch gekennzeichnet, dass** die chemische Konditionierung, Schritt b), zur Verhinderung der Oxidation der Kuchen und/oder Schlämme, die aus Schritt a) erhalten wurden, mit einem organischen Lösungsmittel, welches nicht säuresensitiv ist, wie zum Beispiel Aceton, Ether, Ethanol, Propanol, Isopropanol, Methanol, Butanol, durchgeführt wird.

4. Verfahren nach Anspruch 1, **dadurch gekennzeichnet, dass** die chemische Konditionierung, Schritt b), zur Verhinderung der Oxidation der Kuchen und/oder Schlämme, die aus Schritt a) erhalten wurden, in zwei Schritten durchgeführt wird: zuerst eine Konditionierung in einem organischen Lösungsmittel, welches nicht säuresensitiv ist, wie zum Beispiel Aceton, Ether, Ethanol, Propanol, Isopropanol, Methanol, Butanol, gefolgt von einer Konditionierung in einer nicht-oxidierenden Säure, wie zum Beispiel eine Mineralsäure, organische Säure, wobei eine solche organische Säure eine Monocarbonsäure oder Dicarbonsäure sein kann.

5. Verfahren nach Anspruch 1, **dadurch gekennzeichnet, dass** die Behandlung mit Fluorwasserstoffsäure, Schritt c), in einer Weise durchgeführt wird, dass das Verhältnis Si und HF [1] : [zwischen 0,01 und 1] nach Gewicht beträgt.

6. Verfahren nach Anspruch 1, **dadurch gekennzeichnet, dass** die Behandlung d) mit Fluorwasserstoffsäure und Wasserstoffperoxid in einer Weise durchgeführt wird, dass die Verhältnisse $Si:HCl:H_2O_2$ [1] : [0,05 bis 0,5] : [0,05 bis 0,2] nach Gewicht betragen.

7. Verfahren nach Anspruch 1, **dadurch gekennzeichnet, dass** die Behandlung d) mit Fluorwasserstoffsäure und Wasserstoffperoxid in einer Weise durchgeführt wird, dass die Verhältnisse $Si:HF:H_2O_2$ [1] : [0,01 bis 0,1] : [0,05 bis 0,5] nach Gewicht betragen.

8. Verfahren nach Anspruch 1, **dadurch gekennzeichnet, dass** die zweite Behandlung mit Fluorwasserstoffsäure, Schritt e), in einer Weise durchgeführt wird, dass das Verhältnis Si:HF [1] : [0,05 bis 0,15] beträgt.

9. Verfahren nach Anspruch 1, **dadurch gekennzeichnet, dass** die Behandlung f) der Vorbereitung für den Kompaktierungsschritt unter Inertgasen oder Vakuum durchgeführt wird und die Temperatur auf 100 C° erhöht wird.

10. Verfahren nach Anspruch 1, **dadurch gekennzeichnet, dass** die Behandlung f) der Vorbereitung für den Kompaktierungsschritt durchgeführt wird, indem der Siliciumkuchen mit Ethanol, Isopropanol, Butanol, Methanol, Ether oder einer Mischung davon gewaschen wird.

11. Verfahren nach Anspruch 1, **dadurch gekennzeichnet, dass** der Kompaktierungsschritt, g), in einer Form durchgeführt wird.

**12.** Verfahren nach Anspruch 11, **dadurch gekennzeichnet, dass** die Form ein Tiegel aus Siliciumdioxid ist.

**13.** Verfahren nach Anspruch 11, **dadurch gekennzeichnet, dass** die Form eine innere Form aufweist, die entfernt werden kann.

**14.** Verfahren nach Anspruch 13, **dadurch gekennzeichnet, dass** die Form aufblasbar ist.

**15.** Verfahren nach Anspruch 13, **dadurch gekennzeichnet, dass** die Form wasserlöslich und/oder ethanollöslich und/oder acetonlöslich ist.

**16.** Verfahren nach Anspruch 13, **dadurch gekennzeichnet, dass** die Form durch einen Schmelzpunkt niedriger als 150 C° gekennzeichnet ist.

**17.** Verfahren nach Anspruch 1, **dadurch gekennzeichnet, dass** der Kompaktierungsschritt g) gemäß den hier nachfolgend aufgeführten Schritten durchgeführt wird:

a) getrocknetes Siliciumpulver wird dem Inneren eines Industriestandard-Gusstiegels zugeführt, welcher unter einer Stickstoffumgebung gehalten wird;
b) der mit dem Siliciumtrockenpulver gefüllte Tiegel wird unter Vakuum gebracht, bis das Vakuum Werte im Bereich von 20-60 kPa erreicht;
c) mit Hilfe eines Stickstoffstroms bei Raumtemperatur wird das Vakuum der Umgebung, welche den mit dem Siliciumpulver gefüllten Tiegel enthält, aufgehoben und der Druck auf den Wert von etwa 1 Bar erhöht; wobei der Stickstoff auf seinem Weg durch die Siliciumpartikel eine Sogwirkung auf die Siliciumpartikel ausübt, was eine gleichmäßige Kompaktierung des Siliciumpulvers ergibt.

**18.** Verfahren nach Anspruch 1, **dadurch gekennzeichnet, dass** der Kompaktierungsschritt g) durch Tablettierung oder Pelletierung des getrockneten Siliciumpulvers durchgeführt wird.

**Revendications**

**1.** Procédé de réutilisation de poudre de silicium récupérée de scies à ruban et d'autres opérations mécaniques sur le silicium, sous la forme de matériau de base pour préparer des charges de creuset destinées au coulage de lingots de silicium polycristallin-multicristallin pouvant être utilisés pour des applications photovoltaïques, ledit procédé étant **caractérisé par** les étapes suivantes :

a) récupération de poudre de silicium à partir de scies à ruban, de scies hélicoïdales, d'opérations d'usinage par filtration ou agglomération centrifuge et traitement des boues épuisées ;
b) conditionnement dans un environnement non oxydant ;
c) traitement avec de l'acide fluorhydrique ;
d) traitement avec de l'acide chlorhydrique et/ou de l'acide fluorhydrique et du peroxyde d'hydrogène ;
e) second traitement avec de l'acide fluorhydrique ;
f) préparation pour l'étape de tassement par séchage sous vide et gaz inerte, ou par lavage avec un solvant organique ;
g) tassement de la poudre de silicium.

**2.** Procédé selon la revendication 1, **caractérisé en ce que** le conditionnement chimique, étape b), visant à éviter l'oxydation des gâteaux et/ou des bouillies récupérées de l'étape a) est réalisé à un pH compris entre 0,5 et 5,5, et de façon plus préférentielle compris entre 3 et 5, au moyen d'un acide non-oxydant tel qu'un acide minéral, des acides organiques monocarboxyliques et dicarboxyliques.

**3.** Procédé selon la revendication 1, **caractérisé en ce que** le conditionnement chimique, étape b), visant à éviter l'oxydation des gâteaux et/ou des bouillies récupérés de l'étape a), est réalisé avec un solvant organique insensible à l'acide, tel que de l'acétone, de l'éther, de l'éthanol, du propanol, de l'isopropanol, du méthanol, du butanol.

**4.** Procédé selon la revendication 1, **caractérisé en ce que** le conditionnement chimique, étape b), visant à éviter l'oxydation des gâteaux et/ou des bouillies récupérés de l'étape a) est réalisé en deux étapes : d'abord un conditionnement dans un solvant organique insensible à l'acide, tel que de l'acétone, de l'éther, de l'éthanol, du propanol, de l'isopropanol, du méthanol, du butanol, suivi d'un conditionnement dans un acide non oxydant tel qu'un acide minéral, un acide organique, un tel acide organique pouvant être monocarboxylique ou dicarboxylique.

5. Procédé selon la revendication 1, **caractérisé en ce que** le traitement avec de l'acide fluorhydrique, étape c), est réalisé d'une façon selon laquelle le rapport de Si à HF est de [1]: [entre 0,01 et 1] en poids.

6. Procédé selon la revendication 1, **caractérisé en ce que** le traitement d) avec de l'acide fluorhydrique et du peroxyde d'hydrogène est réalisé d'une façon selon laquelle les rapports Si:HCl:H2O2 sont de [1]: [entre 0,05 et 0,5]: [entre 0,05 et 0,2] en poids.

7. Procédé selon la revendication 1, **caractérisé en ce que** le traitement d) avec de l'acide fluorhydrique et du peroxyde d'hydrogène est réalisé d'une façon selon laquelle les rapports Si:HF:H2O2 sont de [1]:[entre 0,01 et 0,1]: [entre 0,05 et 0,5] en poids.

8. Procédé selon la revendication 1, **caractérisé en ce que** le second traitement avec de l'acide fluorhydrique, étape e), est réalisé d'une façon selon laquelle le rapport Si:HF est de [1]: [entre 0,05 et 0,15].

9. Procédé selon la revendication 1, **caractérisé en ce que** le traitement f) de préparation pour l'étape de tassement est réalisé sous des gaz inertes ou sous vide, et **en ce que** la température est élevée jusqu'à 100 °C.

10. Procédé selon la revendication 1, **caractérisé en ce que** le traitement f) de préparation pour l'étape de tassement est réalisé par lavage du gâteau de silicium avec de l'éthanol, de l'isopropanol, du butanol, du méthanol, de l'éther ou un de leurs mélanges.

11. Procédé selon la revendication 1, **caractérisé en ce que** l'étape de tassement g) est réalisé dans un moule.

12. Procédé selon la revendication 11, **caractérisé en ce que** le moule est un creuset fait de silice.

13. Procédé selon la revendication 11, **caractérisé en ce que** le moule a un moule intérieur qui peut être retiré.

14. Procédé selon la revendication 13, **caractérisé en ce que** le moule est gonflable.

15. Procédé selon la revendication 13, **caractérisé en ce que** le moule est soluble dans l'eau et/ou soluble dans l'éthanol et/ou soluble dans l'acétone.

16. Procédé selon la revendication 13, **caractérisé en ce que** le moule est **caractérisé par** un point de fusion inférieur à 150 °C.

17. Procédé selon la revendication 1, **caractérisé en ce que** l'étape de tassement g) est réalisé en suivant les étapes énumérées ci-après :

a) de la poudre de silicium séchée est ajoutée à l'intérieur d'un creuset de moulage industriel standard qui est maintenu dans un environnement d'azote ;
b) le creuset rempli de la poudre sèche de silicium est placé sous vide, jusqu'à ce que le vide atteigne les valeurs dans la plage de (20-60) kPa ;
c) au moyen d'un flux d'azote à température ambiante, le vide de l'environnement contenant le creuset rempli de la poudre de silicium est rompu et la pression est élevée à la valeur d'environ 1 bar ; dans sa trajectoire à travers les particules de silicium, l'azote crée un effet de décrassage sur les particules de silicium, donnant un tassement régulier de la poudre de silicium.

18. Procédé selon la revendication 1, **caractérisé en ce que** l'étape de tassement g) est réalisé par compression en comprimés ou en granulés de la poudre de silicium séchée.

**Fig. 1:** PROCESS CONCEPTUAL VIEW SHOWING:

Section A: SILICON KERF RECOVERY AND CONDITIONING PROCESS
Section B: SURFACE DECONTAMINATION OF SILICON CAKES - SLUDGES
Section C: SILICON POWDER COMPACTION PROCESSES

## _Fig._ _1_: PROCESS CONCEPTUAL VIEW SHOWING:

( Part I )    Section A:   SILICON KERF RECOVERY AND CONDITIONING PROCESS

EP 2 303 776 B1

**_Fig. 1_** : PROCESS CONCEPTUAL VIEW SHOWING:

( *Part II* )    Section B:    SURFACE DECONTAMINATION OF SILICON CAKES - SLUDGES

EP 2 303 776 B1

_**Fig.**_ **1**: PROCESS CONCEPTUAL VIEW SHOWING:

( _Part_ _III_ )    **Section B cont.**: SURFACE DECONTAMINATION OF SILICON CAKES - SLUDGES

EP 2 303 776 B1

**Fig. 1** : PROCESS CONCEPTUAL VIEW SHOWING:

(Part IV)    Section C:   SILICON POWDER COMPACTION PROCESSES

C

| | I |
| | II |
| | III |
| | Part IV |

DRY SILICON POWDER

DRY SILICON POWDER

Alcohol → Cake re-slurry

(C,3)
INDUSTRIAL COMPACTION PROCESS

(C,2)
VACUUM-NITROGEN DENSIFICATION PROCESS ← Crucibles

(C,1)
Sol-Gel BASED COMPACTION PROCESS ← Crucibles

SILICON PELLETS / DISCS

COMPACTED SILICON CHARGES INSIDE CRUCIBLES

SINGLE BLOCK SILICON CHARGES INSIDE CRUCIBLES

MELTING / CASTING

MELTING / CASTING

MELTING / CASTING

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030041895 A
- DD 240729 A1
- US 20060042539 A
- CN 1947870
- CN 1947869
- WO 2006126365 A
- KR 20020065105
- TW 279393 B
- TW 279393
- TW 289393
- US 7175685 B
- US 2007014682 A
- WO 2007065766 A